# EUROPÄISCHE PATENTSCHRIFT

(11) **EP 0 329 971 B1**
(45) Veröffentlichungstag und Bekanntmachung des Hinweises auf die Patenterteilung: **14.09.1994**
(21) Anmeldenummer: 89101393.0
(22) Anmeldetag: 27.01.1989
(51) Int. Cl.: B61H 15/00, B61H 5/00

(54) **Scheibenbremsgestänge mit Nachstellung**
Disc brake gear with adjustment
Tringlerie de frein à disque à rattrapage de jeu

(30) Priorität: 22.02.1988 DE 3805432
(43) Veröffentlichungstag der Anmeldung: 30.08.1989
(73) Patentinhaber: Bergische Stahl-Industrie, D-42859 Remscheid (DE)
(72) Erfinder: Rocholl, Hans, D-5630 Remscheid (DE)
(74) Vertreter: Dahlkamp, Heinrich-Leo

(56) Entgegenhaltungen:
- DE-A- 1 780 463
- FR-A- 2 294 898

## Beschreibung

Die Erfindung betrifft ein Scheibenbremsgestänge für mindestens zwei benachbarte Bremsscheiben mit automatischer Nachstellung des Lüftspiels mittels eines im Bremsgestänge angeordneten Spannschlosses, wobei der Betätigungszylinder für beide Bremsscheiben an der Bremszange einer Bremsscheibe angeordnet ist,

Aus DE 27 29 6o6 C2 ist ein Bremsgestänge für zwei am gleichen Rad angreifende Bremsbacken bekannt geworden, wobei der Betätigungszylinder an dem Gestänge einer Bremsbacke angreift und eine Nachstellvorrichtung in der Hauptbremsstange angeordnet ist. Der gravierende Nachteil dieser Vorrichtung besteht darin, dass eine sehr grosse Anzahl Verbindungs- und Gelenkpunkte zwischen dem Bremszylinder und den Bremsbacken vorhanden sind, die alle dem Verschleiss unterworfen sind und dadurch entweder eine dauernde Nachstellung bedingen oder eine zu grosse Unsicherheit in die Genauigkeit der Nachstellung bringen.

In einem anderen Fall (DE 17 8o 463 C2) werden die Bremszangen zweier auf der gleichen Achse angeordneter Bremsscheiben mit Gestängen miteinander verbunden, wobei in einer Verbindungsstange ein Spannschloss für die Nachstellung und der Betätigungszylinder am Drehgestell befestigt und mit einer Bremszange wirkverbunden ist, deren einer Bremshebel ebenfalls mit dem Drehgestell verbunden ist. Der Nachteil dieser Vorrichtung liegt darin, dass man in dieses Bremsgestänge keine selbsttätige Nachstellvorrichtung einsetzen kann, ohne erfinderisch tätig werden zu müssen.

Der vorliegenden Erfindung liegt daher die Aufgabe zugrunde, ein auf zwei (oder mehr) Bremsscheiben wirkendes Bremsgestänge vorzusehen, mit dem bei Verwendung einer einzigen automatischen Nachstellvorrichtung das Lüftspiel für die Bremsbacken beider Bremsscheiben einstellbar ist.

Die Lösung der Aufgabe besteht darin, dass zwischen je einem Bremshebel der beiden Gestänge eine an sich bekannte automatische Nachstellvorrichtung angeordnet ist und einer der anderen freien Bremshebel mit einem die an sich bekannte Nachstellvorrichtung steuernden Hebel verbunden ist.

Der Vorteil der erfindungsgemässen Konstruktion liegt vor allem darin, dass einerseits die Nachstellvorrichtung an sich bekannt ist und andererseits trotzdem wegen der geringen Anzahl Verbindungspunkte wenig verschleissanfällig ist.

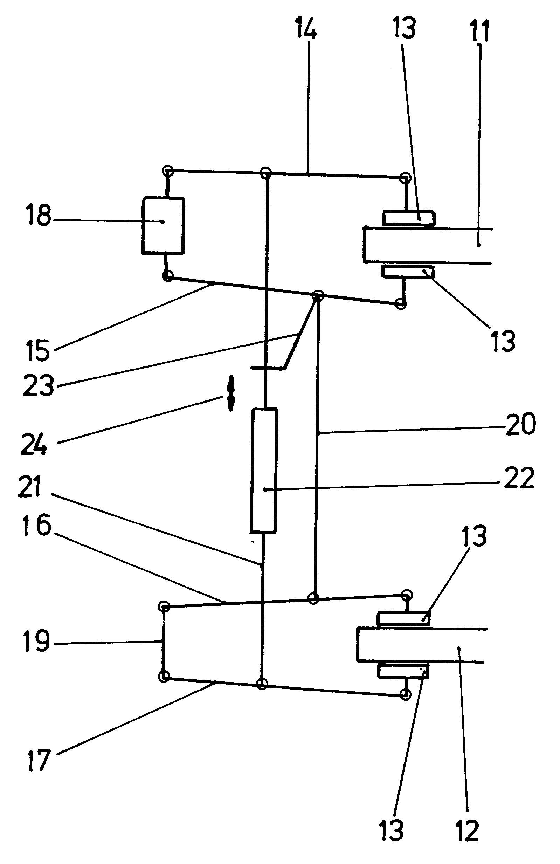

Nach der Zeichnung, in der die Erfindung schematisch dargestellt ist, sind zwei Bremsscheiben 11 und 12 auf der gleichen Fahrzeugwelle (nicht dargestellt) angeordnet. Bei beiden Bremsscheiben werden von je einer Bremszange die Bremsbacken 13 an die Reibflächen der Bremsscheiben 11 und 12 gedrückt, um zu bremsen. Jeder Bremsbelag ist mit einem Bremshebel 14, 15, 16 und 17 verbunden. Zwischen den Enden der Bremshebel 14 und 15 ist ein Betätigungszylinder 18 angeordnet, welcher bei Druck die beiden Bremshebel 14 und 15 auseinander drückt. Die beiden anderen Bremshebel 16 und 17 sind an ihren Enden durch die Stange 19 miteinander verbunden. Sowohl der Betätigungszylinder 18 als auch die Verbindungsstange 19 sind beweglich am Fahrzeug- oder Drehgestellrahmen gelagert. Weiter sind die inneren Bremshebel 15 und 16 durch die Bremsstange 2o miteinander verbunden und die beiden Bremshebel 14 und 17 sind durch die Stange 21 miteinander verbunden. In der Stange 21 ist eine automatische aber an sich bekannte Nachstellvorrichtung 22 angeordnet, durch die die Länge der Stange 21 in Abhängigkeit von der Nachstellung verändert wird. Im Beispiel ist am Bremshebel 15 oder am Bremshebel 16 ein Nachstellhebel 23 angeordnet, der mit dem Nachstellmechanismus der Nachstellvorrichtung 22 zusammenwirkt, wenn er sich auf ein bestimmtes Mass 24 der Vorrichtung 22 genähert hat.

Im dargestellten Beispiel wird bei grösserem Verschleiss an den vier Bremsbacken 13 oder auch nur an einer Bremsbacke 13 der Abstand 24 zwischen dem Nachstellhebel 23 und der Nachstellvorrichtung 22 solange verkleinert, bis die Nachstellung in bekannter Weise ausgelöst wird, wodurch die Stange 21 verlängert wird, sodass der Abstand 24 zwischen Nachstellvorrichtung 22 und Nachstellhebel 23 wieder auf das ursprüngliche Mass vergrössert wird, bei dem das Lüftspiel der Bremsbacken 13 richtig eingestellt ist.

Es sind natürlich noch andere Konfigurationen und Modifikationen möglich, welche jedoch immer noch im Schutzbereich des Anspruchs liegen.
So kann die Nachstellvorrichtung 22 auf der Stange 21 zwischen zwei Bremshebeln 14,15 oder 16,17 angeordnet werden, wobei jeweils einer der Bremshebel 14 - 17 als Nachstellhebel 23 benutzt werden kann. Auch kann die Nachstellvorrichtung in der anderen Verbindungsstange 2o angeordnet sein, wobei dann der Nachstellhebel 23 an dem nicht mit der Stange 2o verbundenen Bremshebel 14 oder 17 angeordnet ist.

## Patentansprüche

1. Scheibenbremsgestänge für mindestens zwei benachbarte Bremsscheiben mit automatischer Nachstellung des Lüftspiels mittels eines im Bremsgestänge angeordneten Spannschlosses, wobei der Betätigungszylinder für beide Bremsscheiben an der Bremszange einer Bremsscheibe angeordnet ist, dadurch gekennzeichnet, dass zwischen je einem Bremshebel (14,15,16,17) der beiden Gestänge (14,15 oder 16,17) eine an sich bekannte automatische Nachstellvorrichtung (22) angeordnet ist und einer der anderen freien Bremshebel mit einem die an sich bekannte Nachstellvorrichtung steuernden Nachstellhebel (23) verbunden ist.

## Claims

1. Disk brake linkage for at least two adjoining brake disks with automatic adjustment of air slack (play) by use of a turnbuckle situated on the brake rods, whereby the controlling cylinder for both brake disks is situated on the traverse of a brake disk, with the following characteristics therein, that betweeen each separate brake lever (14, 15, 16, 17) of both linkage rods (14, 15 or 16, 17) is an automatic adjusting device known in the art (22) and one of the other brake arms which is connected to an adjustment lever which controls the controlling device, this controlling device being known in the art.

## Revendications

1. Tringlerie de frein à disques pour au moins deux disques de freinage avoisinants avec rattrapage automatique du jeu des garnitures par l'intermédiaire d'un tendeur, disposé dans la tringlerie de frein, le cylindre d'actionnement pour les deux disques étant disposé sur l'étrier d'un frein à disques, caractérisé par le fait qu'entre chacun des leviers de frein (14, 15, 16, 17) des deux tringleries (14, 15, 16, 17) est installé un dispositif de rattrapage de jeu automatique (22), connu en soi, et que l'un des autres leviers de frein libres est relié à un levier de réglage de rattrapage de jeu (23) commandant le dispositif de rattrapage de jeu connu en soi.
